# EUROPÄISCHE PATENTSCHRIFT

(11) **EP 4 028 207 B1**
(45) Veröffentlichungstag und Bekanntmachung des Hinweises auf die Patenterteilung: **18.10.2023**
(21) Anmeldenummer: 20774896.3
(22) Anmeldetag: 07.09.2020
(51) Int. Cl.: B23P 11/02, H05B 6/40, H05B 6/14

(54) **GERÄT UND VERFAHREN ZUR THERMISCHEN BEHANDLUNG EINES SCHRUMPFFUTTERS**
DEVICE AND METHOD FOR THERMALLY TREATING A SHRINK-FIT CHUCK
DISPOSITIF ET PROCÉDÉ DE TRAITEMENT THERMIQUE D'UN MANDRIN FRETTÉ

(30) Priorität: 11.09.2019 DE 102019124469
(43) Veröffentlichungstag der Anmeldung: 20.07.2022
(73) Patentinhaber: Helmut Diebold GmbH&Co. Goldring-Werkzeugfabrik, 72417 Jungingen (DE)
(72) Erfinder: DIEBOLD, Hermann, 72379 Hechingen (DE)
(74) Vertreter: Pfiz, Thomas
(86) Internationale Anmeldenummer: PCT/EP2020/074910
(87) Internationale Veröffentlichungsnummer: WO 2021/048040

(56) Entgegenhaltungen:
- WO-A2-2007/028522
- DE-A1-102007 044 097
- DE-U1-202006 005 517
- DE-U1-202013 007 878
- US-A1- 2010 051 610

## Beschreibung

Die Erfindung betrifft ein Gerät zur thermischen Behandlung eines Schrumpffutters gemäß dem Oberbegriff des Patentanspruchs 1. Die Erfindung betrifft weiter ein entsprechendes Verfahren beim Ein/Ausschrumpfen eines Werkzeugs in das bzw. aus dem Schrumpffutter.

Aus der EP 1 470 888 A1 ist eine Kühlvorrichtung für ein Schrumpffutter bekannt, welche eine zur Aufnahme des Schrumpffutters ausgebildete, mit Kühlflüssigkeit befüllbare Tauchkammer aufweist. Dort ist das Schrumpffutter unter Anhebung des Flüssigkeitsspiegels in der stationär angeordneten, turmartigen Tauchkammer mit der Kühlflüssigkeit umspülbar.

Die DE 10 1007 044097 A1, die den Oberbegriff der Ansprüche 1 und 14 offenbart, sieht eine Verschiebung der Werkzeugaufnahme vor, was aber zu Gefährdungen des Bedieners führen kann. Darüber hinaus wird auch die Verfahrmechanik thermisch stark beeinflusst.

Ausgehend hiervon liegt der Erfindung die Aufgabe zugrunde, die im Stand der Technik bekannten Vorrichtungen und Verfahren weiter zu verbessern und eine möglichst einfach und sicher betreib- und bedienbare Konstruktion für einen schnellen und werkzeugschonenden Arbeitsablauf anzugeben.

Zur Lösung dieser Aufgabe wird die im Patentanspruch 1 bzw. 14 angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, das Schrumpffutter in einer Halterung stationär zu halten und die Kühleinheit und ggf. die Heizeinheit entsprechend zuzustellen. Demzufolge wird erfindungsgemäß vorgeschlagen, dass die Halterung gerätefest angeordnet ist, und dass das Kühlrohr in der Freigabestellung in ein Gehäuse oder Gestell abgesenkt ist. Dadurch wird eine vereinfachte Handhabung mit reduzierten Bedienereingriffen und zugleich eine gleichmäßige und rasche Kühlung erreich, so dass auch keine unerwünschten Verformungen oder Verzug im Werkzeug auftreten. Im Einzelnen ergeben sich folgende vorteilhafte Effekte:
- Die Werkzeugaufnahme bzw. das Schrumpffutter kann direkt nach dem Schrumpfvorgang und automatisiert abgekühlt werden. Der Benutzer kommt erst mit der abgekühlten Werkzeugaufnahme wieder in Kontakt. Dies ist besonders in Sachen Arbeitssicherheit wichtig.
- Es kann eine große Menge an Flüssigkeit in das Kühlrohr gefördert werden, so dass eine schnelle Wärmeabfuhr von der heißen Werkzeugaufnahme weg möglich ist.
- Die Abkühlung ist unabhängig von der äußeren Gestalt bzw. Werkzeugkontur.
- Die Flüssigkeitssäule im Kühlrohr umschließt die Werkzeugaufnahme vollständig. Die Werkzeugaufnahme wird somit nicht punktuell abgekühlt, was ansonsten zu einem Verzug der Werkzeugaufnahme und damit zu Rundlauffehlern führen kann.
- Das Gerät ist konstruktiv einfach, da nur eine Lineareinheit benötigt wird, um den Abkühlprozess durchzuführen und ggf. die induktive Erwärmungseinheit wieder in die Ausganglage zu bringen.

Vorteilhafterweise ist das Kühlrohr mittels eines Hubantriebs entlang einer Vertikalführung verfahrbar ist. Hierbei ist es zur Reduzierung der Störanfälligkeit besonders vorteilhaft, wenn der Hubantrieb sich außerhalb des Kühlrohrs befindet und somit keinen direkten Kontakt zur Kühlflüssigkeit hat.

Eine weitere Vereinfachung auch hinsichtlich der Flüssigkeitsförderung ergibt sich dadurch, dass das Kühlrohr über eine Kühlflüssigkeitsleitung mit dem Tank verbunden ist und in der Kühlstellung unter Druckluftbeaufschlagung des Tanks mit Kühlflüssigkeit befüllbar ist.

Vorteilhaft hinsichtlich einer raschen und gleichmäßigen Kühlung ist es auch, wenn das Schrumpffutter bei mit Kühlflüssigkeit befülltem Kühlrohr vollständig von einer Flüssigkeitssäule umschlossen ist.

Vorteilhafterweise besitzt das Kühlrohr eine axial zu einer Mittelachse des abzukühlenden Schrumpffutters ausgerichtete, zylindrische Hülse, an deren unterem Stirnende eine mit Durchlässen für Kühlflüssigkeit versehene Bodeneinheit angeordnet ist. Vorzugsweise ist das Kühlrohr bzw. die Hülse transparent, so dass der Bediener dauerhaft die Werkzeugaufnahme sieht. Insbesondere bei einem Defekt einer Komponente, wenn der Abkühlvorgang nicht wie geplant durchgeführt werden kann, sieht dies der Bediener und fasst nicht versehentlich die noch heiße, ungekühlte Werkzeugaufnahme an.

Um eine hohe Zyklenzahl und eine gute Wärmeabfuhr zu gewährleisten, ist es von Vorteil, wenn das Fassungsvermögen des Tanks für Kühlflüssigkeit vorzugsweise um ein Vielfaches größer als das Fassungsvermögen des Kühlrohrs ist.

Eine weitere besonderes bevorzugte Ausgestaltung sieht vor, dass an einem oberen Abschnitt des Kühlrohrs eine mit Druckluft beaufschlagbare Blaseinheit zur Blastrocknung des Schrumpffutters angeordnet ist. Die Blaseinheit bläst automatisiert die Werkzeugaufnahme trocken, so dass diese ohne zusätzliches Handling direkt nach der Abkühlung einsatzbereit ist.

Um die Gerätesicherheit weiter zu verbessern, ist es vorteilhaft, wenn an der Halterung ein in den freien Querschnitt des Kühlrohrs eingreifendes Rückhaltesieb angeordnet ist.

Eine weitere Verbesserung ergibt sich dadurch, dass die vorzugsweise durch eine Induktionsspule gebildete Heizeinheit in eine auf das Schrumpffutter einwirkende Heizstellung vorzugsweise manuell verschiebbar ist.

Eine weitere einfache Automatisierungsmöglichkeit ergibt sich dadurch, dass das Kühlrohr beim Anheben in die Kühlstellung die Heizeinheit von der Halterung weg in eine Ausgangsstellung selbsttätig mitbewegt.

Um eine einfache Positionierung zu erlauben, ist es von Vorteil, wenn die Heizeinheit entlang einem Drahtseil geführt ist und daran mittels eines Drahtseilhalters arretierbar ist.

Für eine weitere Handhabungsvereinfachung ist es günstig, wenn der Drahtseilhalter durch einen Auslösemechanismus, z.B. einen Druckknopf aus seiner Arretierungsstellung lösbar ist.

Um eine Rückbewegung in die Ausgangsstellung zu vereinfachen, ist es vorteilhaft, wenn der Drahtseilhalter einen Freilauf für ein ungehindertes Anheben der Heizeinheit aufweist.

Vorteilhafterweise ist das Drahtseil an einem Gestell zwischen zwei voneinander beabstandeten Klemmstellen gespannt ist.

Eine weitere vorteilhafte Ausgestaltung sieht vor, dass die linear verfahrbare Heizeinheit über ein Schleppkabel mit einer Stromversorgung verbunden ist.

Für einen flexiblen Einsatz ist es auch von Vorteil, wenn die Heizeinheit ein von der Kühleinheit trennbares, unter horizontaler oder vertikaler Ausrichtung über ein drehbares Bedien-/Anzeigefeld betreibbares Modul bildet.

Eine weitere Verbesserung in dieser Hinsicht wird dadurch erreicht, dass die Heizeinheit und die Kühleinheit vorzugsweise über werkzeuglos betätigbare Verbindungsmittel lösbar miteinander verbunden bzw. verbindbar sind.

In verfahrensmäßiger Hinsicht wird die eingangs genannte Aufgabe dadurch gelöst, dass zum Abkühlen des Schrumpffutters ein Kühlrohr in eine das Schrumpffutter umhüllende Kühlstellung bewegt wird, wobei das Kühlrohr aus einem Reservoir mit einer Kühlflüssigkeit befüllt wird, wobei das Schrumpffutter in einer Halterung stationär gehalten wird, und wobei das Kühlrohr aus einer in ein Gehäuse oder Gestell abgesenkten Freigabestellung in die Kühlstellung bewegt wird. Damit lassen sich die vorstehend erwähnten Vorteile gleichermaßen erzielen.

Vorteilhafterweise wird die Heizeinheit relativ zu dem Schrumpffutter zwischen einer Ruhestellung und einer Wirkstellung hin und her bewegt.

Im Folgenden wird die Erfindung anhand der in der Zeichnung in schematischer Weise dargestellten Ausführungsbeispiele näher erläutert. Es zeigen
- Fig. 1: ein Gerät mit einer Heiz- und einer Kühleinheit zur thermischen Behandlung eines Schrumpffutters in einer Seitenansicht;
- Fig. 2: das Gerät bei aktiver Heizeinheit in einer gegenüber Fig. 1 um 90° gedrehten, teilweise geschnittenen Seitenansicht;
- Fig. 3: das Gerät bei aktiver Kühleinheit in Fig. 2 entsprechender Seitenansicht;
- Fig. 4: eine bodenseitig in das Kühlrohr einsetzbare Bodeneinheit in einem Axialschnitt;
- Fig. 5: eine Blaseinheit zum Aufsetzen auf das Kühlrohr der Kühleinheit in einem Axialschnitt; und
- Fig. 6: einen Drahtseilhalter für die Heizeinheit in einer Seitenansicht.

Das in der Zeichnung dargestellte kombinierte Kühl- und Heizgerät 10 dient zur Temperierung eines Schumpffutters 12 beim Ein- bzw. Ausschrumpfen eines Schaftwerkzeugs 14, insbesondere eines Fräsers oder Bohrers. Zu diesem Zweck sind eine induktiv arbeitende Heizeinheit 16 und eine als Flüssigkeitskühler ausgebildete Kühleinheit 18 an einem Gerätegestell 20 modulartig miteinander kombiniert.

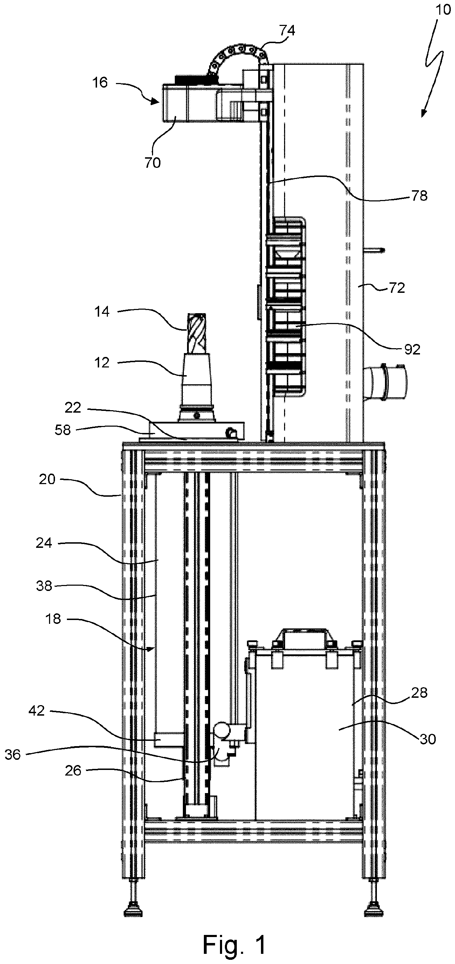

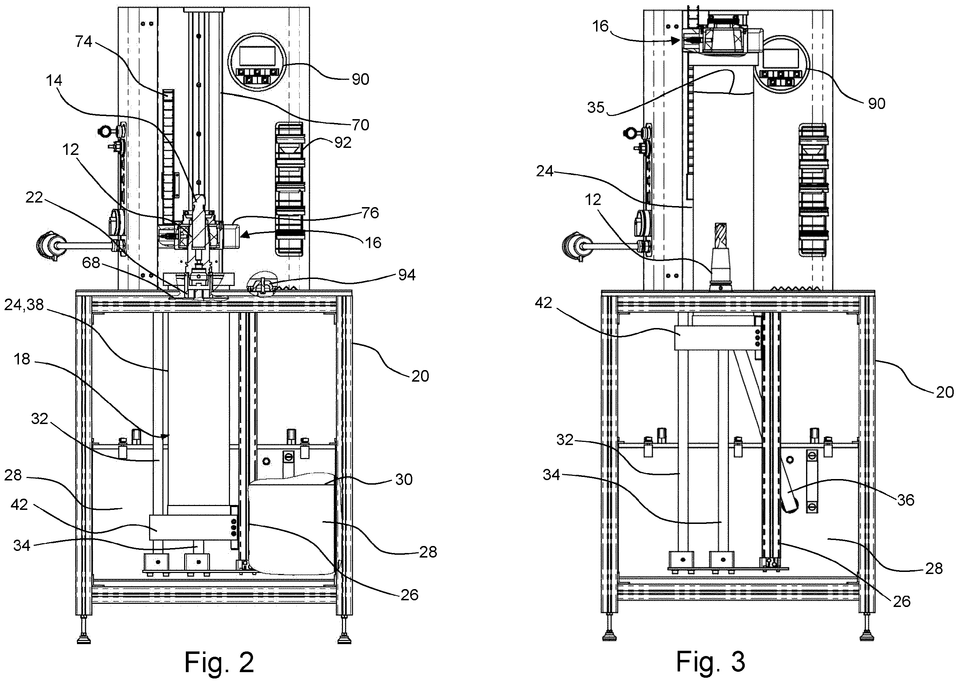

Das Schrumpffutter 12 lässt sich in einer gerätefest angeordneten Aufnahme bzw. Halterung 22 stationär positionieren. Zum Erwärmen des Schrumpffutters 12 kann die Heizeinheit 16 aus der in Fig. 1 gezeigten Ausgangsstellung in die in Fig. 2 gezeigte Heizstellung abgesenkt werden. Durch die thermische Ausdehnung beim induktiven Heizen des Schrumpffutters 12 ist es sodann möglich, das Werkzeug 14 einzusetzen oder zu entnehmen. Zum beschleunigten Abkühlen lässt sich die Kühleinheit 18 aus der in Fig. 1 gezeigten Freigabestellung in die in Fig. 3 gezeigte Kühlstellung anheben und mit Flüssigkeit befüllen.

Die Kühleinheit 18 umfasst ein Kühlrohr 24, einen Hubantrieb 26 für das Kühlrohr und ein Reservoir bzw. einen Tank 28 für Kühlflüssigkeit 30. Das Kühlrohr 24 ist mittels des Hubantriebs 26 entlang einer durch zwei parallele Stangen 32, 34 gebildeten Vertikalführung automatisch verfahrbar. Der Hubantrieb 26 kann beispielsweise durch einen kolbenstangenlosen pneumatischen Mitnehmerzylinder gebildet sein, welcher mit Pressluft betrieben wird. In der Freigabestellung ist das Kühlrohr 24 in einen ggf. gehäuseartig geschlossenen Bereich des Gestells 20 abgesenkt.

Das Kühlrohr 24 ist über eine Kühlflüssigkeitsleitung 36 mit dem Tank 28 verbunden und in der Kühlstellung unter Druckluftbeaufschlagung des Tanks mit Kühlflüssigkeit 30 befüllbar. Die Befüllung erfolgt zumindest soweit, dass das Schrumpffutter 12 vollständig von einer Flüssigkeitssäule 35 umschlossen ist, wie es in Fig. 3 gezeigt ist. Dabei kann eine große Menge an Flüssigkeit in das Kühlrohr 24 verdrängt werden, welche zusätzlich noch zirkuliert. Kombiniert bewirkt dies eine schnelle Wärmeabfuhr des heißen Schrumpffutters 12. In diesem Zusammenhang ist es auch vorteilhaft, wenn das Fassungsvermögen des Tanks 28 für Kühlflüssigkeit 30 um ein Vielfaches, bspw. um mehr als das Doppelte größer als das Fassungsvermögen des Kühlrohrs 24 ist.

Zweckmäßig weist das Kühlrohr 24 eine axial zu einer Mittelachse bzw. Werkzeugdrehachse des abzukühlenden Schrumpffutters 12 ausgerichtete, zylindrische Hülse 38 auf. Diese besteht vorteilhafterweise aus einem transparenten Material, bspw. Acrylglas, so dass der Bediener alle Prozessschritte unter Sichtkontrolle hat.

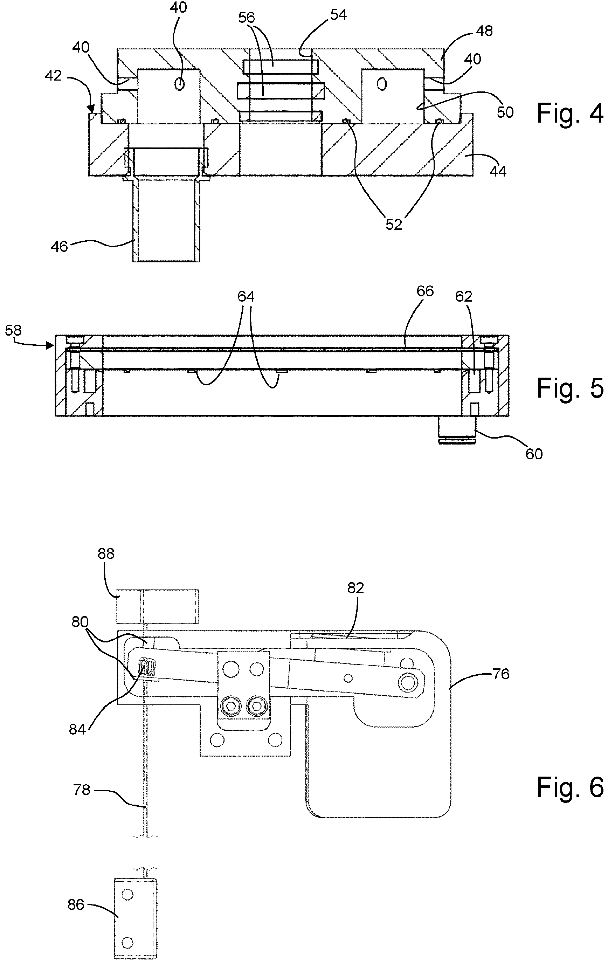

Am unteren Stirnende der Hülse 38 ist eine mit Durchlässen 40 für Kühlflüssigkeit versehene Bodeneinheit 42 angeordnet, deren Aufbau aus Fig. 4 näher ersichtlich ist. Eine untere Grundplatte 44 ermöglicht die Ankopplung an den Hubantrieb 26. Die exzentrisch angeordnete Verbindungshülse 46 erlaubt den Anschluss der Kühlflüssigkeitsleitung 36. Auf der Grundplatte 44 sitzt eine Kühlkanalplatte 48, welche die in Umfangsrichtung verteilten radialen Durchlässe 40 über einen mit der Verbindungshülse 46 kommunizierenden Ringkanal 50 mit Kühlflüssigkeit speist. Dabei sorgen konzentrische O-Ringe 52 für eine Abdichtung gegenüber der Grundplatte 44. Für den Durchgriff der zentralen Führungsstange 34 ist eine Axialbohrung 54 vorgesehen, wobei Abdichtelemente 56 einen Flüssigkeitsdurchtritt verhindern.

Wie auch aus Fig. 5 ersichtlich, ist als weitere Funktionseinheit eine mit Druckluft beaufschlagbare Blaseinheit 58 oben an dem Kühlrohr 24 positioniert, um bei dessen Absenken ohne weiteres Zutun eine Blastrocknung des Schrumpffutters 12 mit Druckluft zu ermöglichen. Die hülsenförmige Blaseinheit 58 besitzt einen Pneumatikanschluss 60, über den Druckluft auf einen Ringkanal 62 und von dort auf nach innen in das Kühlrohr 24 gerichtete, in Umfangswinkelabständen voneinander angeordnete Blasdüsen 64 verteilt wird. Eine Abdeckblende 66 mit beweglichen Lamellen bietet dabei einen Abblasschutz gegenüber der Umgebung.

Um zu verhindern, dass Gegenstände ungewollt in die Kühleinheit 18 fallen, befindet sich zwischen der Halterung 22 und der zentralen Stange 34 ein stationäres Rückhaltesieb 68 (Fig. 2), das beim Hochfahren des Kühlrohrs 24 in dessen freien Querschnitt eingreift.

Die Heizeinheit 16 umfasst eine Induktionsspule 70, die an einem turmartigen Gestellaufbau 72 aus einer oberen Ausgangsstellung in eine auf das Schrumpffutter 12 einwirkende untere Heizstellung manuell verschiebbar ist. In umgekehrter Richtung wird Induktionsspule 70 beim Anheben des Kühlrohrs 24 von der Halterung 22 weg in die Ausgangsstellung zurück selbsttätig mitbewegt. Die in dieser Weise vertikal auf und ab bewegbare Induktionsspule 70 ist über ein Schleppkabel 74 flexibel mit einer Stromversorgung verbunden.

Zur vereinfachten Positionierung ist die Induktionsspule 70 mittels einer manuell handhabbaren Bewegungseinheit 76 entlang einem Drahtseil 78 bewegbar und daran mittels eines Drahtseilhalters 80 arretierbar.

Wie am besten aus Fig. 6 erkennbar, besitzt der Drahtseilhalter 80 einen Auslösemechanismus in Form eines Druckknopfes 82, um die gegen eine Bewegung nach unten wirkende Arretierung zu lösen. Um das selbsttätige Anheben beim Hochfahren des Kühlrohrs 24 zu erlauben, ist ein Freilauf 84 in den Drahtseilhalter 80 integriert. Das Drahtseil 78 selbst ist zwischen zwei voneinander beabstandeten, gestellfesten Klemmstellen 86, 88 fixiert.

Grundsätzlich ist es möglich, die Heizeinheit 16 von dem Gestell 20 abzunehmen und als gesondertes Modul zu betreiben, wobei neben der vertikalen auch eine horizontale Ausrichtung möglich ist. Um beide Betriebsarten zu unterstützen, kann ein manuell oder elektronisch um 90° drehbares Bedien-/Anzeigefeld 90 vorgesehen sein. Für eine Anpassung an unterschiedliche Durchmesser von Schrumpffuttern können auswechselbare Polschuhe in einem Magazin 92 bereitgehalten werden. Eine weitere bedienerfreundliche Maßnahme besteht darin, dass die Heizeinheit 16 und die Kühleinheit 18 über werkzeuglos betätigbare Verbindungsmittel 94 lösbar miteinander verbunden bzw. verbindbar sind.

## Patentansprüche

1. Gerät zur thermischen Behandlung eines Schrumpffutters (12) mit einer zum Aufnehmen des Schrumpffutters (12) ausgebildeten Halterung (22), einer vorzugsweise induktiven Heizeinheit (16) zur Erwärmung des Schrumpffutters (12) und einer Kühleinheit (18) zur Abkühlung des Schrumpffutters (12), wobei die Kühleinheit (18) ein zwischen einer die Halterung (22) freigebenden Freigabestellung und einer die Halterung (22) umhüllenden Kühlstellung bewegliches Kühlrohr (24) aufweist, und wobei das Kühlrohr (24) aus einem Tank (28) mit einer Kühlflüssigkeit beaufschlagt ist, **dadurch gekennzeichnet, dass** die Halterung (22) gerätefest angeordnet ist, und dass das Kühlrohr (24) in der Freigabestellung in ein Gehäuse oder Gestell (20) abgesenkt ist.

2. Gerät nach Anspruch 1, **dadurch gekennzeichnet, dass** das Kühlrohr (24) mittels eines Hubantriebs (26) entlang einer Vertikalführung (32,34) verfahrbar ist.

3. Gerät nachAnspruch 1 oder 2, **dadurch gekennzeichnet, dass** das Kühlrohr (24) über eine Kühlflüssigkeitsleitung (36) mit dem Tank (28) verbunden ist und in der Kühlstellung unter Druckluftbeaufschlagung des Tanks (28) mit Kühlflüssigkeit befüllbar ist.

4. Gerät nach einem der Ansprüche 1 bis 3, **dadurch gekennzeichnet, dass** das Schrumpffutter (12) bei mit Kühlflüssigkeit befülltem Kühlrohr (24) vollständig von einer Flüssigkeitssäule umschlossen ist.

5. Gerät nach einem der Ansprüche 1 bis 4, **dadurch gekennzeichnet, dass** das Kühlrohr (24) eine axial zu einer Mittelachse des abzukühlenden Schrumpffutters (12) ausgerichtete, vorzugsweise transparente zylindrische Hülse (38) aufweist, an deren unterem Stirnende eine mit Durchlässen für Kühlflüssigkeit versehene Bodeneinheit (42) angeordnet ist.

6. Gerät nach einem der Ansprüche 1 bis 5, **dadurch gekennzeichnet, dass** das Fassungsvermögen des Tanks (28) für Kühlflüssigkeit vorzugsweise um ein Vielfaches größer als das Fassungsvermögen des Kühlrohrs (24) ist.

7. Gerät nach einem der Ansprüche 1 bis 6, **dadurch gekennzeichnet, dass** an einem oberen Abschnitt des Kühlrohrs (24) eine mit Druckluft beaufschlagbare Blaseinheit (58) zur Blastrocknung des Schrumpffutters (12) angeordnet ist.

8. Gerät nach einem der Ansprüche 1 bis 7, **dadurch gekennzeichnet, dass** an der Halterung (22) ein in den freien Querschnitt des Kühlrohrs (24) eingreifendes Rückhaltesieb (68) angeordnet ist.

9. Gerät nach einem der Ansprüche 1 bis 8, **dadurch gekennzeichnet, dass** die vorzugsweise durch eine Induktionsspule (78) gebildete Heizeinheit (16) in eine auf das Schrumpffutter (12) einwirkende Heizstellung vorzugsweise manuell verschiebbar ist.

10. Gerät nach einem der Ansprüche 1 bis 9, **dadurch gekennzeichnet, dass** das Kühlrohr (24) beim Anheben in die Kühlstellung die Heizeinheit (16) von der Halterung (22) weg in eine Ausgangsstellung selbsttätig mitbewegt.

11. Gerät nach einem der Ansprüche 1 bis 10, **dadurch gekennzeichnet, dass** die Heizeinheit (16) entlang einem Drahtseil (78) geführt ist und daran mittels eines Drahtseilhalters (80) arretierbar ist.

12. Gerät nach Anspruch 11, **dadurch gekennzeichnet, dass** der Drahtseilhalter (76) einen Freilauf (84) für ein ungehindertes Anheben der Heizeinheit (16) aufweist.

13. Gerät nach einem der Ansprüche 1 bis 13, **dadurch gekennzeichnet, dass** die Heizeinheit (16) und die Kühleinheit (18) vorzugsweise über werkzeuglos betätigbare Verbindungsmittel (94) lösbar miteinander verbunden bzw. verbindbar sind.

14. Verfahren zur thermischen Behandlung eines Schrumpffutters (12) beim Ein/Ausschrumpfen eines Werkzeugs umfassend zumindest die folgenden Schritte:
a) Erwärmen des Schrumpffutters (12) durch eine induktive Heizeinheit (16),
b) Abkühlen des Schrumpffutters (12) durch eine Kühleinheit (18), wobei ein Kühlrohr (24) in eine das Schrumpffutter (12) umhüllende Kühlstellung bewegt wird und das Kühlrohr (24) aus einem Reservoir (28) mit einer Kühlflüssigkeit befüllt wird,
**dadurch gekennzeichnet, dass**
das Schrumpffutter (12) in einer Halterung (22) stationär gehalten wird, und dass in Schritt b) das Kühlrohr (24) aus einer in ein Gehäuse oder Gestell (20) abgesenkten Freigabestellung in die Kühlstellung bewegt wird..

15. Verfahren nach Anspruch 14, **dadurch gekennzeichnet, dass** in Schritt a) die Heizeinheit (16) relativ zu dem Schrumpffutter (12) zwischen einer Ruhestellung und einer Wirkstellung hin und her bewegt wird.

## Claims

1. Device for thermal treatment of a shrink fit chuck (12), comprising a holder (22) for receiving the shrink fit chuck (12), a preferably inductive heating unit (16) for heating the shrink fit chuck (12), and a cooling unit (18) for cooling the shrink fit chuck (12), the cooling unit (18) having a cooling tube (24) which is movable between a release position releasing the holder (22) and a cooling position enclosing the holder (22), and the cooling tube (24) being supplied with a cooling liquid from a tank (28), **characterized in that** the holder (22) is arranged fixed to the device, **and in that** the cooling tube (24) is lowered into a housing or frame (20) in the release position.

2. Device according to claim 1, **characterized in that** the cooling tube (24) can be moved along a vertical guide (32, 34) by means of a lifting drive (26).

3. Device according to either claim 1 or claim 2, **characterized in that** the cooling tube (24) is connected to the tank (28) via a cooling liquid line (36) and, in the cooling position, can be filled with cooling liquid under the application of compressed air to the tank (28).

4. Device according to any of claims 1 to 3, **characterized in that** the shrink fit chuck (12) is completely surrounded by a liquid column when the cooling tube (24) is filled with cooling liquid.

5. Device according to any of claims 1 to 4, **characterized in that** the cooling tube (24) has a preferably transparent cylindrical sleeve (38) which is oriented axially with respect to a central axis of the shrink fit chuck to be cooled (12), and at the lower end of which a base unit (42) provided with passages for cooling liquid is arranged.

6. Device according to any of claims 1 to 5, **characterized in that** the holding capacity of the tank (28) for cooling liquid is preferably several times greater than the holding capacity of the cooling tube (24).

7. Device according to any of claims 1 to 6, **characterized in that** a blowing unit (58), which can be supplied with compressed air, for blow-drying the shrink fit chuck (12) is arranged on an upper portion of the cooling tube (24).

8. Device according to any of claims 1 to 7, **characterized in that** a retaining screen (68) which engages in a free cross section of the cooling tube (24) is arranged on the holder (22).

9. Device according to any of claims 1 to 8, **characterized in that** the heating unit (16), which is preferably formed by an induction coil (78), is preferably manually movable into a heating position acting on the shrink fit chuck (12).

10. Device according to any of claims 1 to 9, **characterized in that** the cooling tube (24) automatically moves the heating unit (16) away from the holder (22) into a starting position when it is lifted into the cooling position.

11. Device according to any of claims 1 to 10, **characterized in that** the heating unit (16) is guided along a wire cable (78) and can be locked thereto by means of a wire cable holder (80).

12. Device according to claim 11, **characterized in that** the wire cable holder (76) has a freewheel (84) for unhindered lifting of the heating unit (16).

13. Device according to any of claims 1 to 13, **characterized in that** the heating unit (16) and the cooling unit (18) are or can be detachably connected to one another, preferably by means of connecting means which can be operated without tools (94).

14. Method for thermal treatment of a shrink fit chuck (12) during contraction or expansion of a tool, comprising at least the following steps:
a) heating the shrink fit chuck (12) by means of an inductive heating unit (16),
b) cooling the shrink fit chuck (12) by means of a cooling unit (18), a cooling tube (24) being moved into a cooling position enclosing the shrink fit chuck (12), and the cooling tube (24) being filled with a cooling liquid from a reservoir (28),
**characterized in that**
the shrink fit chuck (12) is held in a holder (22) in a stationary manner, **and in that** in step b) the cooling tube (24) is moved from a release position lowered into a housing or frame (20) into the cooling position.

15. Method according to claim 14, **characterized in that** in step a) the heating unit (16) is moved back and forth relative to the shrink fit chuck (12), between a rest position and an operating position.

## Revendications

1. Appareil permettant le traitement thermique d'un mandrin à ajustement fretté (12), comportant un dispositif de maintien (22) conçu pour la réception du mandrin à ajustement fretté (12), une unité de chauffage (16), de préférence par induction, pour le chauffage du mandrin à ajustement fretté (12) et une unité de refroidissement (18) pour le refroidissement du mandrin à ajustement fretté (12), l'unité de refroidissement (18) présentant un tube de refroidissement (24) qui peut être déplacé entre une position de libération libérant le dispositif de maintien (22) et une position de refroidissement entourant le dispositif de maintien (22), et le tube de refroidissement (24) étant alimenté en liquide de refroidissement à partir d'un réservoir (28), **caractérisé en ce que** le dispositif de maintien (22) est disposé de manière à être fixé à l'appareil, **et en ce que** le tube de refroidissement (24) est abaissé dans un boîtier ou un bâti (20) dans la position de libération.

2. Appareil selon la revendication 1, **caractérisé en ce que** le tube de refroidissement (24) peut être déplacé le long d'un guide vertical (32, 34) à l'aide d'un entraînement de levage (26).

3. Appareil selon la revendication 1 ou 2, **caractérisé en ce que** le tube de refroidissement (24) est relié au réservoir (28) par l'intermédiaire d'une conduite de liquide de refroidissement (36) et peut être rempli de liquide de refroidissement dans la position de refroidissement lors d'une alimentation en air comprimé dans le réservoir (28).

4. Appareil selon l'une des revendications 1 à 3, **caractérisé en ce que** le mandrin à ajustement fretté (12) est entièrement entouré par une colonne de liquide lorsque le tube de refroidissement (24) est rempli de liquide de refroidissement.

5. Appareil selon l'une des revendications 1 à 4, **caractérisé en ce que** le tube de refroidissement (24) présente une douille cylindrique (38), de préférence transparente, orientée axialement par rapport à un axe central du mandrin à ajustement fretté (12) à refroidir, une unité de fond (42) pourvue de passages pour le liquide de refroidissement étant disposée au niveau de l'extrémité frontale inférieure de ladite douille cylindrique.

6. Appareil selon l'une des revendications 1 à 5, **caractérisé en ce que** la capacité du réservoir (28) pour du liquide de refroidissement est de préférence plusieurs fois supérieure à la capacité du tube de refroidissement (24).

7. Appareil selon l'une des revendications 1 à 6, **caractérisé en ce qu'**une unité de soufflage (58) pouvant être alimentée en air comprimé est disposée au niveau d'une section supérieure du tube de refroidissement (24) pour le séchage par soufflage du mandrin à ajustement fretté (12).

8. Appareil selon l'une des revendications 1 à 7, **caractérisé en ce qu'**un tamis de retenue (68) venant en prise dans la section transversale libre du tube de refroidissement (24) est disposé au niveau du dispositif de maintien (22).

9. Appareil selon l'une des revendications 1 à 8, **caractérisé en ce que** l'unité de chauffage (16), formée de préférence par une bobine d'induction (78), peut être coulissée, de préférence manuellement, dans une position de chauffage agissant sur le mandrin à ajustement fretté (12).

10. Appareil selon l'une des revendications 1 à 9, **caractérisé en ce que** le tube de refroidissement (24), lorsqu'il est soulevé dans la position de refroidissement, entraîne automatiquement l'unité de chauffage (16) dans une position de départ en l'éloignant du dispositif de maintien (22).

11. Appareil selon l'une des revendications 1 à 10, **caractérisé en ce que** l'unité de chauffage (16) est guidée le long d'un câble métallique (78) et peut y être verrouillée à l'aide d'un support de câble métallique (80).

12. Appareil selon la revendication 11, **caractérisé en ce que** le support de câble métallique (76) présente une roue libre (84) pour un soulèvement sans entrave de l'unité de chauffage (16).

13. Appareil selon l'une des revendications 1 à 13, **caractérisé en ce que** l'unité de chauffage (16) et l'unité de refroidissement (18) sont reliées ou peuvent être reliées l'une à l'autre de manière amovible, de préférence par l'intermédiaire de moyens de liaison (94) pouvant être actionnés sans outil.

14. Procédé permettant le traitement thermique d'un mandrin à ajustement fretté (12) lors de la rétraction/expansion d'un outil, comprenant au moins les étapes suivantes :
a) chauffage du mandrin à ajustement fretté (12) par une unité de chauffage (16) par induction,
b) refroidissement du mandrin à ajustement fretté (12) par une unité de refroidissement (18), un tube de refroidissement (24) étant déplacé dans une position de refroidissement entourant le mandrin à ajustement fretté (12), et le tube de refroidissement (24) étant rempli d'un liquide de refroidissement à partir d'un réservoir (28), **caractérisé en ce que**
le mandrin à ajustement fretté (12) est maintenu de manière fixe dans un dispositif de maintien (22), et **en ce que**, à l'étape b), le tube de refroidissement (24) est déplacé d'une position de libération abaissée dans un boîtier ou un bâti (20) vers la position de refroidissement..

15. Procédé selon la revendication 14, **caractérisé en ce que,** à l'étape a), l'unité de chauffage (16) est déplacée en va-et-vient par rapport au mandrin à ajustement fretté (12) entre une position de repos et une position active.
